# EUROPEAN PATENT APPLICATION

(11) **EP 3 104 312 A1**
(43) Date of publication of application: **14.12.2016**
(21) Application number: 16170114.9
(22) Date of filing: 18.05.2016
(51) Int. Cl.: G06Q 10/00, G06K 7/10

(54) **INFORMATION SEARCH SYSTEM AND INFORMATION SEARCH METHOD**

(30) Priority: 11.06.2015 JP 2015117990
(71) Applicant: Yokogawa Electric Corporation, Tokyo 180-8750 (JP)
(72) Inventor: Akisada, Yukiyo, Tokyo, 180-8750 (JP); Ishii, Yosuke, Tokyo, 180-8750 (JP); Oishi, Kenji, Tokyo, 180-8750 (JP)
(74) Representative: Henkel, Breuer & Partner

(57) **Abstract**

An information search system includes a terminal device and a communicator. The terminal device includes an obtainer, a processor, and a communicator. The obtainer obtains device specification information which is necessary for specifying a device installed in a plant. The processor obtains first information and second information. The first information is identification information of the device specified by using the device specification information. The second information represents a storage place of information which is necessary for maintaining the device. The communicator transmits the first information and the second information to a network. The search server specifies a search place based on the second information transmitted from the terminal device through the network. The search server searches the search place by using the first information as a key. The search server transmits a search result to the terminal device.

## Description

### BACKGROUND

### Technical Fields

The disclosure relates to an information search system and an information search method.

Priority is claimed on Japanese Patent Application No. 2015-117990, filed June 11,2015, the contents of which are incorporated herein by reference.

### Related Art

In a plant and a factory (hereinafter called simply "plant" as a generic name of them), maintenance is performed by a worker periodically or non-periodically, for example, in order to prevent an abnormal operation, or in order to cope with a sudden trouble. For example, in a plant where a DCS (Distributed Control System) is established, field devices (a measurement device, a manipulation device) are checked and maintained. Since various types of field devices are installed in a field of the plant, the worker often refers to documents such as a manual and a specification sheet at a time of maintenance.

The document is a paper medium, and the document is stored in a place (for example, a control room of the plant) which is apart from the field of the plant where maintenance work is conducted. For this reason, in order to refer to the document, it is necessary for the worker to stop working and go to the storage place of the document. Although the worker may be allowed to bring the document in some fields of the plant, even if the worker can bring the document to the field, it is difficult to search a document in a case that the document is a paper medium.

In recent years, digitalization of documents has been advanced, and an environment where a worker can refer to the digitalized document in the field of the plant is being developed. However, since the document is individually provided by a vendor of the field device, an access method for the document and a file format of the document are different in each vendor. For this reason, in a plant where field devices provided by two or more vendors are installed, it is necessary for the worker to perform complicated works in order to refer to a target document.

Because of these reasons, a document search system by which the worker can easily search the target document is desired. It is disclosed in Japanese Unexamined Patent Application Publication No. H5-216935, that although a worker in a field of a plant is not provided with a document, in a case that an abnormality occurs in a large-scale plant, a document search system can quickly provide contents of an exact document required for taking measures.

By the way, even if the document search system is introduced, problems described below are considered.

### (1) It is difficult to input a search keyword efficiently.

A word which can be a search keyword in a field of a plant is often enumeration of characters, such as an identifier of a pipeline and a tag name of a device which are set to a field device beforehand. Since such a word has many characters, it is difficult to input it efficiently. A worker who works in a field of the plant may wear gloves in some places. For this reason, it is difficult for the worker to input a search keyword efficiently while the worker wears the gloves.

### (2) Optimal search results according to a situation of the worker cannot be obtained.

A general search engine used in the Internet ranks a search result in accordance with a general-purpose determination reference, such as data freshness of contents, and a number of keywords contained in the contents. Thus, a situation of the worker, such as who searches, where it is searched, and what is searched, is not taken into consideration at all in the general search engine. For this reason, there is a case that a search result in which a document unrelated to contents of a work conducted by the worker is ranked to a high order is obtained, and an optimal search result according to the situation of the worker is not obtained.

### SUMMARY

An information search system includes a terminal device and a communicator. The terminal device includes an obtainer, a processor, and a communicator. The obtainer obtains device specification information which is necessary for specifying a device installed in a plant. The processor obtains first information and second information. The first information is identification information of the device specified by using the device specification information obtained by the obtainer. The second information represents a storage place of information which is necessary for maintaining the device. The communicator transmits, to a network, the first information and the second information which has been obtained by the processor. The search server specifies a search place based on the second information transmitted from the terminal device through the network. The search server searches the search place by using the first information as a key. The search server transmits a search result to the terminal device.

Further features and aspects of the present disclosure will become apparent from the following detailed description of exemplary embodiments with reference to the attached drawings.

### BRIEF DESCRIPTION OF THE DRAWINGS

FIG. 1 is a block diagram illustrating a whole configuration of an information search system of the first embodiment of the present invention.
FIG. 2 is a block diagram illustrating a main configuration of the terminal device which is included in the information search system of the first embodiment of the present invention.
FIG. 3 is a block diagram typically illustrating a main configuration of the search server included in the information search system of the first embodiment of the present invention.
FIG. 4 is a flow chart illustrating operation of the information search system of the first embodiment of the present invention.
FIG. 5 is a block diagram illustrating a whole configuration of an information search system of the second embodiment of the present invention.
FIG. 6 is a block diagram illustrating a main configuration of the terminal device which is included in the information search system of the second embodiment of the present invention.
FIG. 7 is a drawing illustrating an example of the table used by the information search system of the second embodiment of the present invention.
FIG. 8 is a block diagram illustrating a whole configuration of an information search system of the third embodiment of the present invention.
FIG. 9 is a block diagram illustrating a main configuration of the terminal device which is included in the information search system of the third embodiment of the present invention.
FIG. 10 is a block diagram illustrating a whole configuration of an information search system of the fourth embodiment of the present invention.
FIG. 11 is a block diagram illustrating a main configuration of the terminal device which is included in the information search system of the fourth embodiment of the present invention.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide an information search system and an information search method which can obtain an optimal search result according to a situation of a worker, even if the worker does not input any search keyword.

Hereinafter, with reference to drawings, an information search system and an information search method of embodiments of the present invention will be described in detail.

### [First Embodiment]

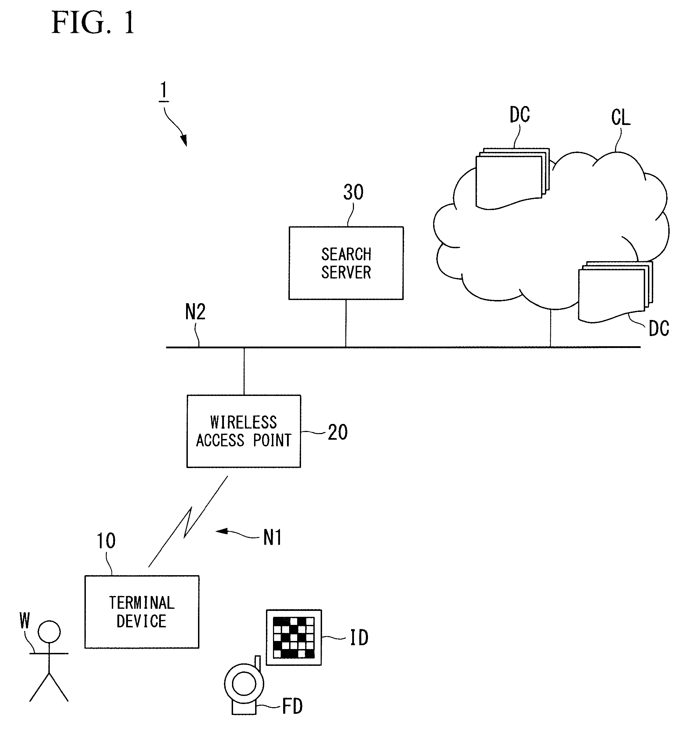

FIG. 1 is a block diagram illustrating a whole configuration of an information search system of the first embodiment of the present invention. As shown in FIG. 1, the information search system 1 of the present embodiment is equipped with a terminal device 10, a wireless access point 20, and a search server 30. The information search system 1 is a system which searches a document DC (information) required by a worker W in order to maintain a field device FD (device) installed in a plant.

As shown in FIG. 1, the terminal device 10 and the wireless access point 20 are connected to a wireless network N1 (network). The wireless access point 20 and the search server 30 are connected to an intranet N2. The wireless network N1 is a wireless network established in a field of the plant by the wireless access point 20. The wireless network N1 can communicate wirelessly in conformity with a wireless communication standard, such as Wi-Fi (registered trademark), WiMAX (registered trademark), and 3G/LTE (registered trademark). The intranet N2 is a network such as Ethernet (registered trademark) established in a monitoring room of the plant.

Here, the plant includes an industrial plant such as a chemical industrial plant, a plant managing and controlling a wellhead (for example, a gas field and an oil field), a plant managing and controlling a generation of electric power (for example, water power, fire power, and nuclear power), a plant managing and controlling a power harvesting (for example, solar power and wind power), a plant managing and controlling water supply and sewerage systems, a dam, and so on.

The field device FD is such as a sensor device (for example, a flowmeter and a temperature sensor), a valve device (for example, a flow control valve and an on-off valve), an actuator device (for example, a fan and a motor), and other devices which are installed in the field of the plant and controlled by a controller (not illustrated) which is a main part of a distributed control system (DCS). A vibration sensor which monitors vibration of a pipeline and vibration of a valve device, and a noise sensor which monitors sound emitted from an actuator device are included in the field device FD. An identifier ID is provided to the field device FD. For example, the identifier ID is a matrix-type two dimensional code such as QR Code (registered trademark).

Information which is necessary for searching a document DC is included in the identifier ID. For example, the following information is included in the identifier ID.

- "Device tag name'': Identification information for identifying the field device FD (first information)
- "Position code": Information which represents an installation position of the field device FD (first information)
- "Model name": Information which represents a type of the field device FD (first information)
- "Storage place": Information which represents a storage place of the document DC relevant to the field device FD (second information)

The document DC is a manual or a specification sheet of the field device FD. The document DC is an electronic document referred when maintenance of the field device FD is conducted. The document DC may be stored in a server prepared in the plant, and may be stored in a server which is managed by a vendor of the field device FD. That is, the document DC can be stored in arbitrary places wherever the search server 30 can search. For example, as shown in FIG. 1, the storage place of the document DC can be a cloud CL which can be searched by the search server 30.

The terminal device 10 is a terminal device used for searching the document DC. The terminal device 10 is used by the worker W who conducts field works of the plant. For example, the terminal device 10 is a smart phone or a tablet type computer. However, in a case of a terminal device is equipped with functions (for example, a camera function, and a wireless communication function) which is necessary to search the document DC, arbitrary terminal devices (for example, a spectacle-type terminal device or a watch-type terminal device) can be used.

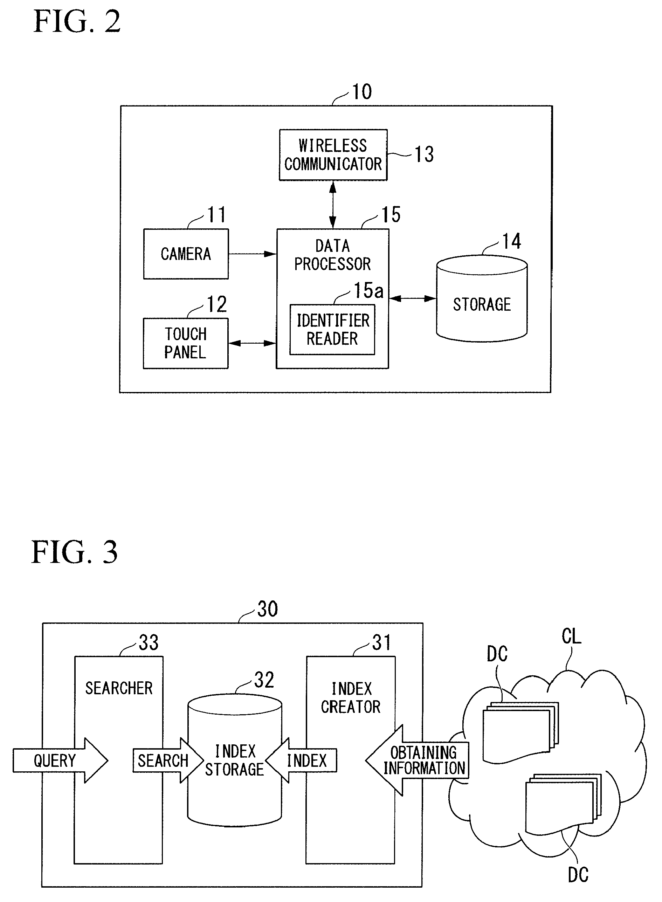

FIG. 2 is a block diagram illustrating a main configuration of the terminal device which is included in the information search system of the first embodiment of the present invention. As shown in FIG. 2, the terminal device 10 is equipped with a camera 11 (obtainer, image obtainer), a touch panel 12 (display), a wireless communicator 13 (communicator), a storage 14, and a data processor 15 (processor). The camera 11 is equipped with a solid-state image sensing device, such as CCD (Charge Coupled Device) and CMOS (Complementary Metal Oxide Semiconductor). The camera 11 can take a still image and a moving image.

The touch panel 12 is an operation display which includes a display (for example, a liquid crystal display, and an organic EL (Electro Luminescence) display) and a position input device (for example, a touchpad). The wireless communicator 13 can communicate wirelessly in conformity with a wireless communication standard, such as Wi-Fi (registered trademark), WiMAX (registered trademark), and 3G/LTE (registered trademark). The wireless communicator 13 communicates through the wireless network N1. The storage 14 stores various types of information used by the data processor 15. For example, the storage 14 is realized by a memory device such as a semiconductor memory or a recording device such as a hard disk.

The data processor 15 processes various types of information used by the terminal device 10. For example, the data processor 15 processes data which is to be displayed on the touch panel 12, data which is input from the touch panel 12, data which is transmitted and received through the wireless communicator 13, data which is input from the storage 14 and output to the storage 14, and other data.

The data processor 15 is equipped with an identifier reader 15a. The identifier reader 15a performs image processing with respect to an image taken by the camera 11, and reads information (for example, "Device tag name", "Position code", "Model name", and "Storage place" which were described above) included in an identifier ID. If the image taken by the camera 11 is an image (device specification information) including an image of the identifier ID, the identifier reader 15a performs reading processing. However, if the image taken by the camera 11 does not include the image of an identifier ID, the identifier reader 15a does not perform the reading processing.

The wireless access point 20 establishes the wireless network N1 described above. The wireless access point 20 relays data which is transmitted and received through the wireless network N1 and data which is transmitted and received through the intranet N2. By the wireless access point 20 being installed, the terminal device 10 and the search server 30 can communicate with each other. In the present embodiment, in order to explain simply, the wireless access point 20 which connects the wireless network N1 to the intranet N2 directly is described as an example, but the wireless access point 20 may be a relay device for connecting with the intranet N2 via public lines, such as 3G (third generation mobile communication system) or 4G (fourth generation mobile communication system).

The search server 30 searches the document DC based on data transmitted from the terminal device 10 through the wireless network N1, and the search server 30 transmits the search result to the terminal device 10 through the wireless network N1. Specifically, the search server 30 specifies a search place based on "Storage place" (information which represents a storage place of the document DC) included in the data transmitted from the terminal device 10. Thereafter, the search server 30 searches the specified search place by using "Device tag name", "Position code", and "Model name" as search keywords. In the present embodiment, although an example in which the search keywords are "Device tag name", "Position code", and "Model name" is described, at least one of "Device tag name", "Position code", and "Model name'' can also be used as the search keywords.

FIG. 3 is a block diagram typically illustrating a main configuration of the search server included in the information search system of the first embodiment of the present invention. As shown in FIG. 3, the search server 30 is equipped with an index creator 31, an index storage 32, and a searcher 33. The index creator 31 obtains information such as the document DC. Thereafter, the index creator 31 converts the obtained information into a format (index) which is easy to search a text document which is a search target. The index creator 31 uses various index techniques for every index structures such as a transposition index and a suffix arrangement.

The index storage 32 stores an index created by the index creator 31. A structure and a form of the index which is stored in the index storage 32 may be arbitrary. The searcher 33 performs search processing with respect to the index storage 32 based on a query which has been input. Specifically, the searcher 33 specifies the search place based on "Storage place" transmitted from the terminal device 10. Thereafter, the searcher 33 searches by using "Device tag name", "Position code", "Model name" as the query.

In the search server 30, the index creator 31 obtains contents (including the document DC) of the search target, analyzes the contents, creates an index associated with a keyword which is supposed to be searched, and manages it. If the data from the terminal device 10 has been received, the searcher 33 specifying a search place and searches the index stored in the index storage 32 based on the search keyword. Thereafter, the searcher 33 transmits the search result to the terminal device 10.

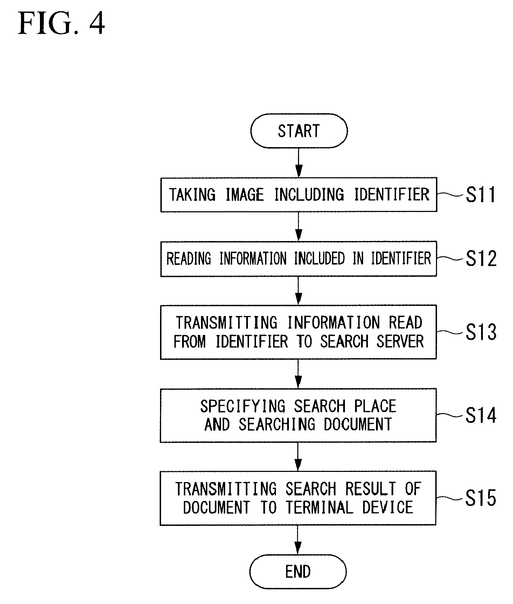

Next, operation of the information search system 1 is described. FIG. 4 is a flow chart illustrating operation of the information search system of the first embodiment of the present invention. When the worker W operates the touch panel 12 of the terminal device 10 and instructs a search start, processing of the flow chart shown in FIG. 4 is started. If the worker W has instructed the search start, the instructions are input from the touch panel 12 into the data processor 15.

Then, an image including an image of the identifier ID is taken by the camera 11, and the taken image is transmitted to the data processor 15 (Step S11). Here, after the search start has been instructed, the worker W operates the terminal device 10 so that the identifier ID prepared along with the field device FD can be arranged in view of the camera 11. By the operation, the image including the image of the identifier ID can be taken.

If the image including the picture of the identifier ID has been captured into the data processor 15, the identifier reader 15a reads the information included in the identifier ID (Step S12). Specifically, the identifier reader 15a reads "Device tag name", "Position code", "Model name", and "Storage place" which are included in the identifier ID. The information read by the identifier reader 15a is output from the data processor 15 to the wireless communicator 13, passes through the wireless network N1, the wireless access point 20, and the intranet N2 in order, and is transmitted to the search server 30 (Step S13).

If the search server 30 has received the data transmitted from the terminal device 10, the search server 30 specifies the search place based on "Storage place" included in the received data. Thereafter, the search server 30 searches the specified search place by using "Device tag name", "Position code", and "Model name", which are included in the received data, as search keywords (Step S 14).

If a search result has been obtained by the above processing, the obtained search result is ranked and transmitted from the search server 30 through the intranet N2, the wireless access point 20, and the wireless network N1 in order, and transmitted to the terminal device 10 (Step S15). If the data processing unit 15 has received the search result from the search server 30, the data processing unit 15 displays a list of the search result on the touch panel 12 in a ranked order.

Here, for example, the search server 30 ranks the search result by using a maintenance history about the field device FD specified by "Device tag name" included in the data from the terminal device 10. The search server 30 specifies the search place based on "Storage place" included in the data from the terminal device 10 in order to search the maintenance history.

As described above, in the present embodiment, the identifier ID prepared along with the field device FD is taken by the camera 11 of the terminal device 10, the information ("Device tag name", "Position code", "Model name", and "Storage place") included in the identifier ID is read, and the read information is transmitted from the terminal device 10 to the search server 30. Thereafter, the search server 30 specifies the search place based on "Storage place" included in the data from the terminal device 10, and searches by using "Device tag name", "Position code", and "Model name" as search keywords. For this reason, in the present embodiment, even if the worker does not input any search keyword, an optimal search result according to a situation of a worker can be obtained.

### [Second Embodiment]

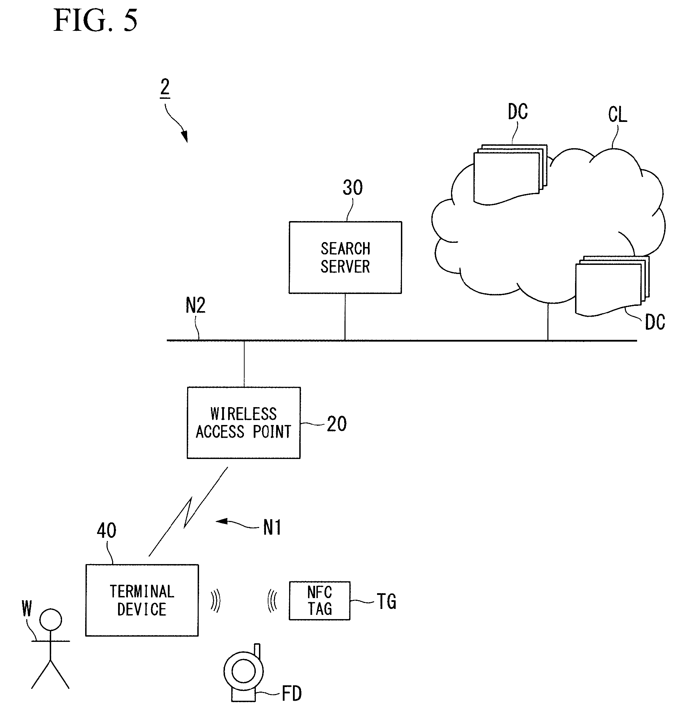

FIG. 5 is a block diagram illustrating a whole configuration of an information search system of the second embodiment of the present invention. In FIG. 5, parts that correspond to those in FIG. 1 are assigned the same reference numerals. As shown in FIG. 5, the information search system 2 of the present embodiment includes a terminal device 40 instead of the terminal device 10 of the information search system 1 shown in FIG. 1. In the present embodiment, an NFC tag TG (short-distance communication tag) is prepared along with the field device FD instead of the identifier ID shown in FIG. 1.

In the information search system 1 of the first embodiment described above, the terminal device 10 reads the information included in the identifier ID prepared along with the field device FD, and the document DC is searched. On the other hand, the information search system 2 of the present embodiment searches the document DC by using the information obtained by the terminal device 40 performing NFC (Near Field Communication) with the NFC tag TG prepared along with field device FD. Here, the NFC means communication (non-contact communication) which becomes possible, for example, if a distance between devices which communicate with each other is several tens of centimeters or less. The NFC also includes communication performed in a state that cases of devices which communicate with each other are contacted.

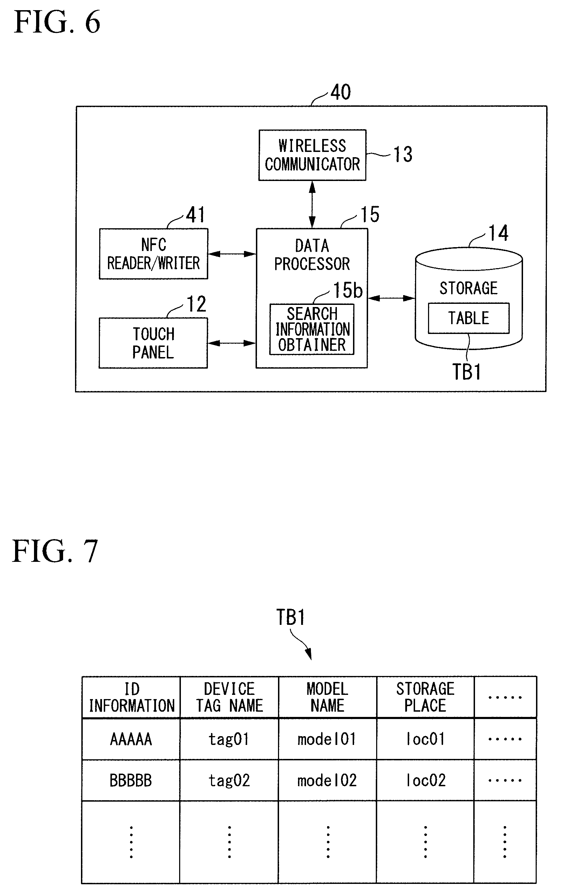

FIG. 6 is a block diagram illustrating a main configuration of the terminal device which is included in the information search system of the second embodiment of the present invention. As shown in FIG. 6, the terminal device 40 is equipped with an NFC reader/writer 41 (obtainer, short-distance communicator) instead of the camera 11 of the terminal device 10 shown in FIG. 1, and equipped with a search information obtainer 15b instead of the identifier reader 15a. Moreover, a table TB1 (first table) is included in the storage 14.

The NFC reader/writer 41 supplies electric power by non-contact to the NFC tag TG, and the NFC reader/writer 41 performs NFC with the NFC tag TG in order to read ID information (storage information) stored in the NFC tag TG. The NFC reader/writer 41 can also write data into the NFC tag TG. The search information obtainer 15b obtains, by using a table TB1 stored in the storage 14, search information according to the ID information read by the NFC reader/writer 41. Here, the search information, which is obtained by the search information obtainer 15b using the table TB1, includes "Device tag name", "Position code", "Model name", "Storage place", and so on, like the first embodiment.

FIG. 7 is a drawing illustrating an example of the table used by the information search system of the second embodiment of the present invention. As shown in FIG. 7, the table TB1 is a table in which the ID information (ID information stored in the NFC tag TG) and the search information ("Device tag name", "Model name", and "Storage place") are associated. The table TB1 shown in FIG. 7 is an example, and arbitrary search information can be stored in the table TB1 in order to obtain an optimal search result of a document DC.

Next, operation of the information search system 2 is described. Fundamental operation of the information search system 2 is the same as the operation of the information search system 1 shown in FIG. 4. For this reason, difference from the operation of the information search system 1 will be mainly described below. The worker W makes the terminal device 40 approach to the NFC tag TG, and the worker W instructs a search start by operating the touch panel 12 of the terminal device 40. Then, the data processor 15 controls the NFC reader/writer 41, and NFC is performed between the NFC reader/writer 41 and the NFC tag TG. Thereby, the ID information (device specification information) stored in the NFC tag TG is read (Step corresponding to Step S11 of FIG. 4).

The ID information read from the NFC tag TG is output from the NFC reader/writer 41 to the data processor 15. The search information obtainer 15b obtains the search information according to the read ID information by using the table TB1 stored in the storage 14 (Step corresponding to Step S12 of FIG. 4). Specifically, the search information obtainer 15b obtains "Device tag name", "Model name", and "Storage place" in accordance with the read ID information.

The information obtained by the search information obtainer 15b is output from the data processor 15 to the wireless communicator 13, passes through the wireless network N1, the wireless access point 20, and the intranet N2, in order, and is transmitted to the search server 30 (Step corresponding to Step S13 of FIG. 4). After the information obtained by the search information obtainer 15b has been transmitted to the search server 30, the same operation as the first embodiment is performed.

As described above, in the present embodiment, the ID information stored in the NFC tag TG prepared along with the field device FD is read by the NFC reader/writer 41 of the terminal device 40, the search information ("Device tag name", "Model name", "Storage place", and so on) according to the read ID information is obtained by using the table TB1 stored in the storage 14, and the obtained search information is transmitted from the terminal device 40 to the search server 30. Thereafter, the search server 30 specifies the search place based on the "Storage place" included in the search information which is from the terminal device 40, and the search server 30 searches by using "Device tag name", "Model name", and so on, as search keywords. For this reason, also in the present embodiment, even if a worker does not input any search keyword, an optimal search result according to a situation of a worker can be obtained.

In the present embodiment, an example that the NFC tag TG is prepared along with the field device FD, and NFC is performed between the NFC tag TG and the terminal device 40, has been described. However, the field device FD may be equipped with a communication function for communicating in conformity with Bluetooth (registered trademark) (or a communication device which has such a communication function may be prepared along with the field device FD), and the terminal device 40 may be also equipped with the same communication function. Furthermore, communications may be performed between the field device FD (or a communication device prepared along with the field device FD) and the terminal device 40 in conformity with Bluetooth (registered trademark).

### [Third Embodiment]

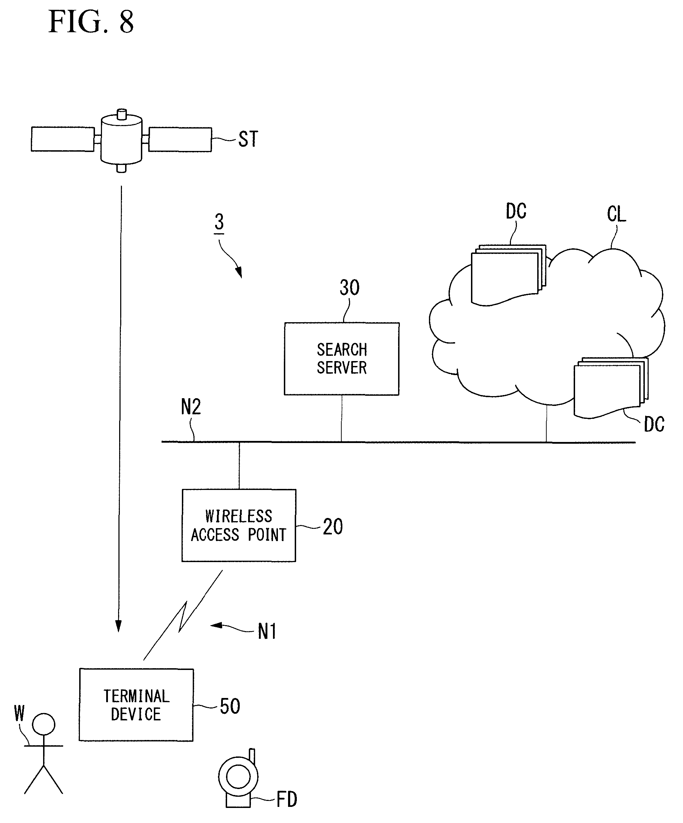

FIG. 8 is a block diagram illustrating a whole configuration of an information search system of the third embodiment of the present invention. In FIG. 8, parts that correspond to those in FIG. 1 are assigned the same reference numerals. As shown in FIG. 8, the information search system 3 of the present embodiment includes a terminal device 50 instead of the terminal device 10 of the information search system 1 shown in FIG. 1. In the present embodiment, the identifier ID shown in FIG. 1 is omitted.

In the information search system 3, the terminal device 50 obtains position information of the field device FD, and the document DC is searched by using the position information. The terminal device 50 obtains the position information by using a positioning function, such as GPS (Global Positioning System). In FIG. 8, in order to understand easily, one GPS satellite ST used by GPS is illustrated.

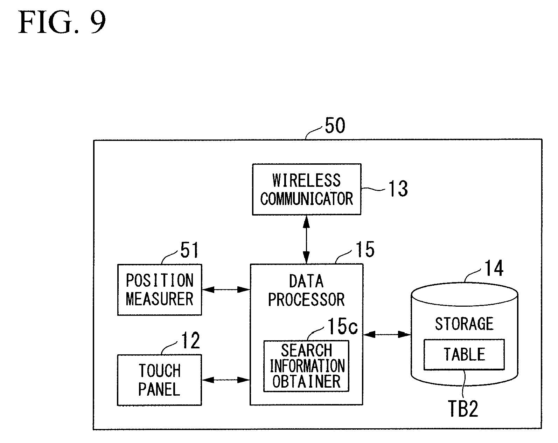

FIG. 9 is a block diagram illustrating a main configuration of the terminal device which is included in the information search system of the third embodiment of the present invention. As shown in FIG. 9, the terminal device 50 is equipped with a position measurer 51 (obtainer, position information obtainer) instead of the camera 11 of the terminal device 10 shown in FIG. 1, and equipped with a search information obtainer 15c instead of the identifier reader 15a. Moreover, a table TB2 (second table) is prepared in the storage 14.

The position measurer 51 measures a position of the terminal device 50. Specifically, the position measurer 51 receives electric wave from the GPS Satellite ST shown in FIG. 8, and the position measurer 51 performs signal processing to the received signal in order to measure the position of the terminal device 50. Here, if the terminal device 50 is arranged at an installation position of the field device FD, position information which represents an installation position of the field device FD can be obtained by the position measurer 51.

The search information obtainer 15c obtains the search information according to the position information obtained by the position measurer 51 by using the table TB2 stored in the storage 14. Here, the search information, which is obtained by the search information obtainer 15c using the table TB2, includes "Device tag name", "Position code", "Model name", "Storage place", and so on, like the first embodiment. The table TB2 is a table of the same form as the table TB1 shown in FIG. 7. For example, the table TB2 is a table which includes "Position information" instead of "ID information" shown in FIG. 7.

Next, operation of the information search system 3 is described. Fundamental operation of the information search system 3 is the same as the operation of the information search system 1 shown in FIG. 4. For this reason, difference from the operation of the information search system 1 will be mainly described below. The worker W makes the terminal device 50 approach to the installation position of the field device FD, and the worker W instructs a search start by operating the touch panel 12 of the terminal device 50. Then, the data processor 15 obtains the position information (device specification information) measured by the position measurer 51 (Step corresponding to Step S11 of FIG. 4).

If the data processor 15 has obtained the position information which represents the installation position of the field device FD, the search information obtainer 15c obtains the search information according to the obtained position information by using the table TB2 stored in the storage 14 (Step corresponding to Step S12 of FIG. 4). Specifically, the search information obtainer 15c obtains "Device tag name", "Model name", and "Storage place" in accordance with the read position information.

The information obtained by the search information obtainer 15c is output from the data processor 15 to the wireless communicator 13, passes through the wireless network N1, the wireless access point 20, and the intranet N2, in order, and is transmitted to the search server 30 (Step corresponding to Step S13 of FIG. 4). After the information obtained by the search information obtainer 15c has been transmitted to the search server 30, the same operation as the first embodiment is performed.

As described above, in the present embodiment, the position information which represents the installation position of the field device FD is measured by the position measurer 51 of the terminal device 50, the search information ("Device tag name", "Model name", "Storage place", and so on) according to the measured position information is obtained by using the table TB2 stored in the storage 14, and the obtained search information is transmitted from the terminal device 50 to the search server 30. Thereafter, the search server 30 specifies the search place based on the "Storage place" included in the search information which is from the terminal device 50, and the search server 30 searches by using "Device tag name", "Model name", and so on, as search keywords. For this reason, also in the present embodiment, even if a worker does not input any search keyword, an optimal search result according to a situation of a worker can be obtained.

In the present embodiment, an example that the position information of the terminal device 50 is obtained by using GPS, has been described. However, the method of obtaining the position information of the terminal device 50 is not limited to the method of using GPS, and arbitrary methods can be used. For example, existing positioning methods used by Wi-Fi (registered trademark) or Bluetooth (registered trademark) can be used.

### [Fourth Embodiment]

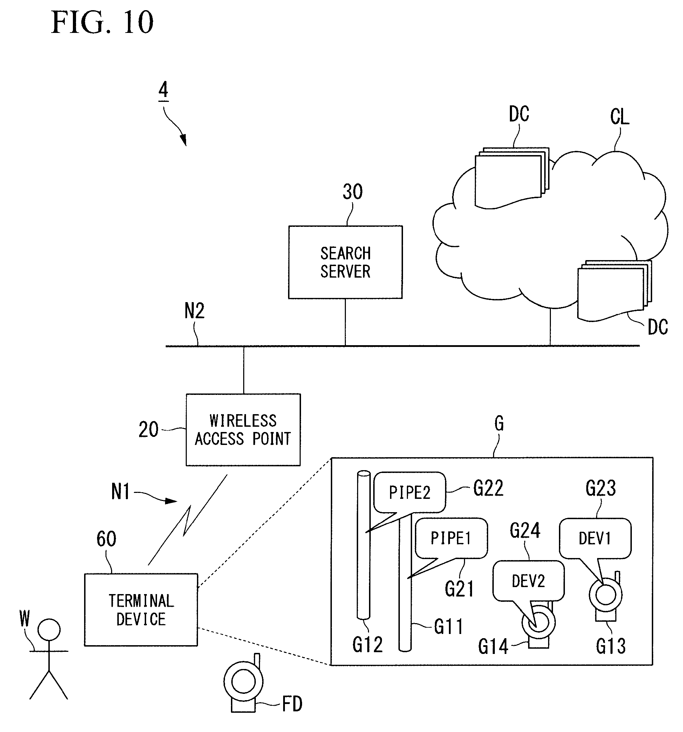

FIG. 10 is a block diagram illustrating a whole configuration of an information search system of the fourth embodiment of the present invention. In FIG. 10, parts that correspond to those in FIG. 1 are assigned the same reference numerals. As shown in FIG. 10, the information search system 4 of the present embodiment includes a terminal device 60 instead of the terminal device 10 of the information search system 1 shown in FIG. 1. In the present embodiment, the identifier ID shown in FIG. 1 is omitted.

The terminal device 60 can superimpose, to an image taken by a camera, additional information according to the taken image by using AR (Augmented Reality) technology, and the terminal device 60 can display it. As shown in FIG. 10, for example, the terminal device 60 can superimpose, to an image G including images G11 to G 14 of pipelines and field devices, images G21 to G24 (additional information) which represent tag information allocated to pipelines and field devices, and the terminal device 60 can display it.

The information search system 4 of the present embodiment searches the document DC by using additional information selected by instructions of the worker W among the additional information (images G21 to G24 shown in FIG. 10) displayed on the terminal device 60.

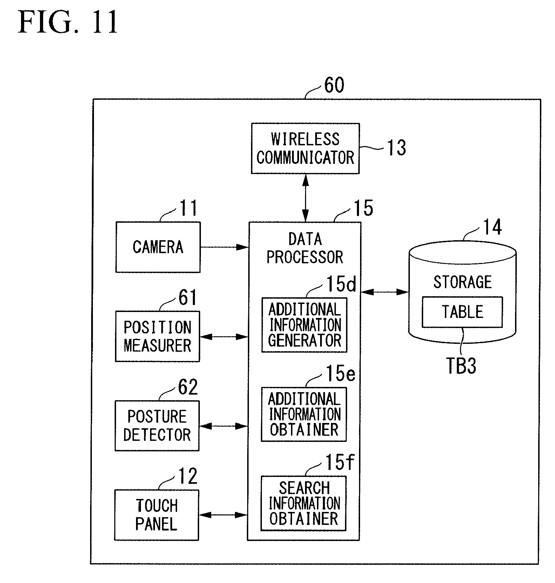

FIG. 11 is a block diagram illustrating a main configuration of the terminal device which is included in the information search system of the fourth embodiment of the present invention. As shown in FIG. 11, in the terminal device 60, a position measurer 61 and a posture detector 62 are added to the terminal device 10 shown in FIG. 1, and the terminal device 60 is equipped with an additional information generator 15d, an additional information obtainer 15e, and a search information obtainer 15f instead of the identifier reader 15a. Moreover, a table TB3 (third table) is prepared in the storage 14.

The position measurer 61 is the same as the position measurer 51 shown in FIG. 9. The position measurer 61 measures a position of the terminal device 60. For example, the position measurer 61 receives electric wave from the GPS Satellite ST shown in FIG. 8, and the position measurer 61 performs signal processing to the received signal in order to measure the position of the terminal device 60. The posture detector 62 is equipped with a gyroscope sensor, a geomagnetism sensor (electronic compass), and so on. The posture detector 62 detects posture and direction of the terminal device 60. If the detection result of the posture detector 62 is used, for example, a photographing direction of the camera 11 can be specified.

The additional information generator 15d generates the additional information (images G21 to G24) shown in FIG. 10. Specifically, the additional information generator 15d specifies the field device FD, which is located in the photographing direction of the camera 11, based on a measurement result of the position measurer 61, a detection result of the posture detector 62, information which represents a field angle of the camera 11, and device information about the field device FD stored in the storage 14. Thereafter, the additional information generator 15d generates an image (for example, G21 to G24 shown in FIG. 10) which represents the tag information of the specified field device FD.

The additional information obtainer 15e obtains additional information (device specification information) selected, by the instructions performed by the worker W operating the touch panel 12, among the additional information displayed on the touch panel 12. The search information obtainer 15f obtains the search information according to the additional information obtained by the additional information obtainer 15e by using the table TB3 stored in the storage 14. Here, the search information, which is obtained by the search information obtainer 15f using the table TB3, includes "Device tag name", "Position code", "Model name", "Storage place", and so on, like the first embodiment. The table TB3 is a table of the same form as the table TB1 shown in FIG. 7. For example, the table TB3 is a table which includes "Additional information" instead of "ID information" shown in FIG. 7.

Next, operation of the information search system 4 is described. Fundamental operation of the information search system 4 is the same as the operation of the information search system 1 shown in FIG. 4. For this reason, difference from the operation of the information search system 1 will be mainly described below. First, the worker W operates the touch panel 12 of the terminal device 60, and enables an AR (Augmented Reality) function. Thereby, processing of the additional information generator 15d is started. The touch panel 12 of the terminal device 60 displays an image where the additional information according to the image taken by the camera 11 has been superimposed on the taken image.

If the worker W operates the touch panel 12 and one of the additional information displayed on the touch panel 12 is selected, the additional information obtainer 15e obtains one of the additional information in accordance with the selection (Step corresponding to Step S11 of FIG. 4). If one of the additional information is obtained, the search information obtainer 15f obtains the search information according to the obtained additional information by using table TB3 stored in the storage 14 (Step corresponding to Step S12 of FIG. 4). Specifically, the search information obtainer 15f obtains "Device tag name", "Model name", and "Storage place", in accordance with the obtained additional information.

The information obtained by the search information obtainer 15f is output from the data processor 15 to the wireless communicator 13, passes through the wireless network N1, the wireless access point 20, and the intranet N2, in order, and is transmitted to the search server 30 (Step corresponding to Step S13 of FIG. 4). After the information obtained by the search information obtainer 15f has been transmitted to the search server 30, the same operation as the first embodiment is performed.

As described above, in the present embodiment, an image where the additional information according to the image taken by the camera 11 has been superimposed on the taken image is displayed on the touch panel 12 of the terminal device 60, additional information is selected in accordance with instructions of the worker W, the search information ("Device tag name", "Model name", "Storage place", and so on) according to the selected additional information is obtained by using table TB3 stored in the storage 14, and the obtained search information is transmitted from the terminal device 60 to the search server 30. Thereafter, the search server 30 specifies the search place based on the "Storage place" included in the search information which is from the terminal device 60, and the search server 30 searches by using "Device tag name", "Model name", and so on, as search keywords. For this reason, also in the present embodiment, even if a worker does not input any search keyword, an optimal search result according to a situation of a worker can be obtained.

As described above, although the embodiments of the present invention have been described, the present invention is not restricted to the above-described embodiments, and can be freely modified within the scope thereof. For example, the functions of the terminal devices 10, 40, 50, and 60 described in the first embodiment to the fourth embodiment may be integrated in one terminal device. By using the terminal device, in any cases that the identifier ID is prepared along with the field device FD, that the NFC tag TG is prepared along with the field device FD, and that both the identifier ID and the NFC tag TG are not prepared along with the field device FD, the document DC can be searched.

In the above-described embodiments, although an example of searching the document DC (manual, specification sheet, and so on) of the field device FD has been described, information other than the document DC of the field device FD can be also searched. For example, if stock information which represents a stock number of field devices FD, a stock place, delivery date of stock, and so on, exists in the cloud CL, the search server 30 can search the stock information by using "Model name" as a search keyword. Moreover, the search server 30 can order a field device FD based on the searched stock information.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. An information search system comprising:
a terminal device which comprises:
an obtainer configured to obtain device specification information which is necessary for specifying a device installed in a plant;
a processor configured to obtain first information and second information, the first information being identification information of the device specified by using the device specification information obtained by the obtainer, the second information representing a storage place of information which is necessary for maintaining the device; and
a communicator configured to transmit, to a network, the first information and the second information which has been obtained by the processor; and
a search server configured to specify a search place based on the second information transmitted from the terminal device through the network, the search server being configured to search the search place by using the first information as a key, the search server being configured to transmit a search result to the terminal device.

2. The information search system according to claim 1,
wherein the obtainer comprises an image obtainer configured to obtain, as the device specification information, an image including an image of an identifier provided along with the device, and
wherein the processor is configured to perform image processing with respect to the image obtained by the image obtainer, and obtain the first information and the second information included in the identifier.

3. The information search system according to claim 1,
wherein the obtainer comprises a short-distance communicator configured to perform short-distance communication with a short-distance communication tag provided along with the device, and obtain, as the device specification information, storage information stored in the short-distance communication tag, and
wherein the processor is configured to obtain the first information and the second information according to the storage information obtained by the short-distance communicator, by using a first table in which the storage information, the first information, and the second information are associated with each other.

4. The information search system according to claim 1,
wherein the obtainer comprises a position information obtainer configured to obtain position information, which represents installation position of the device, based on a position of a self-terminal device, and
wherein the processor is configured to obtain the first information and the second information according to the position information obtained by the position information obtainer, by using a second table in which the position information, the first information, and the second information are associated with each other.

5. The information search system according to claim 1,
wherein the terminal device comprises:
an image obtainer configured to obtain an image which includes an image of the device; and
a display configured to display the image obtained by the image obtainer with additional information of the device which is superimposed on the image of the device,
wherein the obtainer comprises an additional information obtainer configured to obtain, as the device specification information, additional information selected by external instructions among the additional information displayed on the display, and
wherein the processor is configured to obtain the first information and the second information according to the additional information obtained by the additional information obtainer, by using a third table in which the additional information, the first information, and the second information are associated with each other.

6. The information search system according to claim 1,
wherein the search server comprises:
an index creator configured to obtain the information which is necessary for maintaining the device, the index creator being configured to create an index based on the obtained information;
an index storage which stores the index created by the index creator; and
a searcher configured to specify the search place in the index storage based on the second information received from the terminal device, the searcher being configured to search the search place by using the first information as a key.

7. The information search system according to claim 6,
wherein the index creator is configured to obtain contents of a search target, analyze the contents, and create an index associated with a keyword which is supposed to be searched.

8. The information search system according to claim 1,
wherein the search server is configured to rank the search result by using a maintenance history about the device specified by using the first information received from the terminal device.

9. The information search system according to claim 1,
wherein the search server is configured to search stock information of the device by using the first information as a key, and order a device based on the searched stock information.

10. The information search system according to claim 9,
wherein the first information is information which represents a type of the device, and
wherein the stock information is information which represents a stock number of devices, a stock place, and delivery date of stock.

11. An information search method comprising:
obtaining, by a terminal device, device specification information which is necessary for specifying a device installed in a plant;
obtaining, by the terminal device, first information and second information, the first information being identification information of the device specified by using the device specification information obtained by the terminal device, the second information representing a storage place of information which is necessary for maintaining the device;
specifying, by a search server, a search place based on the second information obtained by the terminal device;
searching, by the search server, the search place by using the first information as a key; and
transmitting, by the search server, a search result of the search server to the terminal device.

12. The information search method according to claim 11, further comprising:
obtaining, by the terminal device, as the device specification information, an image including an image of an identifier provided along with the device;
performing, by the terminal device, image processing with respect to the image obtained by the terminal device; and
obtaining, by the terminal device, the first information and the second information included in the identifier.

13. The information search method according to claim 11, further comprising:
performing, by the terminal device, short-distance communication with a short-distance communication tag provided along with the device;
obtaining, by the terminal device, as the device specification information, storage information stored in the short-distance communication tag; and
obtaining, by the terminal device, the first information and the second information according to the storage information obtained by the terminal device, by using a first table in which the storage information, the first information, and the second information are associated with each other.

14. The information search method according to claim 11, further comprising:
obtaining, by the terminal device, position information, which represents installation position of the device, based on a position of a self-terminal device; and
obtaining, by the terminal device, the first information and the second information according to the position information obtained by the terminal device, by using a second table in which the position information, the first information, and the second information are associated with each other.

15. The information search method according to claim 11, further comprising:
obtaining, by the terminal device, an image which includes an image of the device;
displaying, by the terminal device, the image obtained by the terminal device with additional information of the device which is superimposed on the image of the device;
obtaining, by the terminal device, as the device specification information, additional information selected by external instructions among the additional information displayed by the terminal device; and
obtaining, by the terminal device, the first information and the second information according to the additional information obtained by the terminal device, by using a third table in which the additional information, the first information, and the second information are associated with each other.
